# EUROPÄISCHE PATENTSCHRIFT

(11) **EP 1 328 376 B1**
(45) Veröffentlichungstag und Bekanntmachung des Hinweises auf die Patenterteilung: **20.06.2007**
(21) Anmeldenummer: 01974001.8
(22) Anmeldetag: 05.09.2001
(51) Int. Cl.: B23Q 15/00

(54) **VERFAHREN ZUR DREHBEARBEITUNG UND ZUR QUALITÄTSSICHERUNG**
ROTATIONAL MACHINING AND QUALITY ASSURANCE METHOD
PROCEDE DE TOURNAGE ET DE CONTROLE DE QUALITE

(30) Priorität: 08.09.2000 DE 10044592
(43) Veröffentlichungstag der Anmeldung: 23.07.2003
(73) Patentinhaber: MTU Aero Engines GmbH, 80995 München (DE)
(72) Erfinder: FEIST, Wolf-Dieter, 85256 Vierkirchen (DE)
(86) Internationale Anmeldenummer: PCT/DE2001/003384
(87) Internationale Veröffentlichungsnummer: WO 2002/020212

(56) Entgegenhaltungen:
- WO-A-96/05331
- US-A- 4 501 095
- US-A- 5 115 403
- US-A- 5 631 851

## Beschreibung

Die Erfindung betrifft ein Verfahren zur Drehbearbeitung und zur Qualitätssicherung thermisch gespritzter, rotationssymmetrischer Anstreif- und Einlaufbeläge von Turbomaschinen, gemäß dem Oberbegriff des Patentanspruches 1.

Thermisch gespritzte Beläge werden in Turbomaschinen, insbesondere in Gasturbinen, als poröse Anstreif- bzw. Einlaufbeläge eingesetzt. Sie sollen einerseits nicht zu weich (porös) sein, um den hohen Belastungen durch wechselnde Gaskräfte und Schwingungen zu widerstehen, andererseits müssen sie weich genug sein, um den anstreifenden bzw. einlaufenden Partner, z.B. eine Schaufelspitze oder eine Dichtschneide (Dichtfin), nicht zu beschädigen. Die Härte der Beläge wird durch Veränderung der Spritzparameter eingestellt. Deren Messung ist allerdings nur sehr unzureichend durch ein spezielles Kugeleindruckverfahren möglich. Die Ergebnisse streuen erheblich und sind kein verlässliches Maß für die Qualität der Schicht. Außerdem sind sie geometrieabhängig.

In vielen Fällen wird die Härte auch an Vergleichsproben, die mit der gleichen Parametereinstellung gespritzt wurden, gemessen. Eine Übertragung der so ermittelten Werte auf das Bauteil ist ebenfalls problematisch.

Die Beläge weisen nach dem Spritzen einen Materialüberschuss auf, der beim Fertigbearbeiten wieder entfernt wird. Die Deckschicht, das heisst die beim Spritzen abschließend aufgebrachte Schicht, weist in der Regel eine andere, härtere Konsistenz auf, als das übrige Belagmaterial. Auch dies ist beim Prüfen zu berücksichtigen.

Die wesentlichen Nachteile der bekannten Verfahren bestehen somit darin, dass oft nur an Proben und nicht am Bauteil selbst gemessen werden kann, sowie darin, dass die Qualitätsprüfung als solche - auch am Bauteil - relativ unzuverlässige Ergebnisse liefert.

Die DE 197 30 008 C1 schützt eine Panzerung für ein metallisches Triebwerksbauteil und ein Verfahren zu ihrer Herstellung. Solche Bauteile sind insbesondere Dichtungsspitzen von Labyrinthdichtungen oder Schaufelspitzen, welche mit entsprechenden Anstreif- bzw. Einlaufbelägen zusammenwirken. Anspruch 18 dieser Patentschrift sieht vor, dass das Bauteil nach dem Beschichten mit einem keramischen Material, vorzugsweise mittels thermischem Spritzen, durch Drehen fertigbearbeitet wird.

Die DE 42 28 333 A1 betrifft eine Zerspanungsvorrichtung zum Fertigbearbeiten einer Oberfläche eines Werkstücks aus einem metallischen Material mit einer Erfassungseinrichtung für die vom Werkstück auf das Zerspanungswerkzeug ausgeübte Schnittkraft. Die Vorrichtung wird vorzugsweise für das Hochglanz-Fertigdrehen von Fotorezeptortrommeln verwendet, wobei die Anforderungen an die Oberflächengüte extrem hoch sind. Typische Merkmale einer solchen Vorrichtung sind ein monokristallines Diamantwerkzeug, eine Zuführeinrichtung für ein flüssiges Schneid-Schmiermittel sowie eine Abführeinrichtung für Späne. Vor der eigentlichen Serienfertigung werden Versuchsreihen mit variierenden Bearbeitungsparametern gefahren und der Schnittkraftverlauf jeweils gemessen und gespeichert. Bei Bearbeitungsfehlern, wie Schwingungen, Kratzern, Spänestau, Nichtbearbeitung etc. ergeben sich charakteristische Schnittkraftverläufe. In der Serienfertigung wird zu jedem Bauteil der Schnittkraftverlauf gemessen, gespeichert und mit den Verläufen aus den Versuchsreihen verglichen. Falls sich eine weitgehende Übereinstimmung mit einem typischen "Fehlerverlauf" (z.B. Schwingungen) ergibt, ist dies ein Anzeichen dafür, dass das jeweilige Bauteil ebenfalls fehlerbehaftet ist. Ggf. sind dann die Bearbeitungsparameter zu ändern. Die beschriebene Zerspanungsvorrichtung sowie das zugehörige Verfahren eignen sich so nur für die Feinstbearbeitung von Oberflächen.

Demgegenüber besteht die Aufgabe der Erfindung darin, ein Verfahren zur Drehbearbeitung und zur Qualitätssicherung thermisch gespritzter, rotationssymmetrischer Anstreif- und Einlaufbeläge von Turbomaschinen anzugeben, das die Belagqualität am Bauteil selbst erfasst, das die Qualitätsprüfung vorteilhaft mit der Bearbeitung kombiniert und das zuverlässige, reproduzierbare Messwerte für den gesamten, nutzbaren Belagbereich liefert.

Diese Aufgabe wird durch die im Patentanspruch 1 gekennzeichneten Merkmale gelöst, in Verbindung mit den gattungsbildenden Merkmalen in dessen Oberbegriff.

Die Drehbearbeitung selbst wird in 2 Schritten durchgeführt, wobei der erste dem Abtragen der relativ harten Deckschicht, der zweite der eigentlichen Bearbeitung auf Maß dient. Während des zweiten Schrittes (Fertigdrehen) werden definierte Drehparameter (Schnittgeschwindigkeit, Vorschub, Einstechtiefe etc.) eingehalten und der Schnittkraftverlauf quantitativ erfasst sowie graphisch bzw. datentechnisch festgehalten. Der Kraftverlauf wird mit vorgegebenen Grenzwerten verglichen, wobei als Ergebnis der Belag zur Verwendung freigegeben oder entfernt und neu gefertigt wird. Für die Definition der maßgeblichen Grenzwerte wird es erforderlich sein, reale Beläge unter Variation der Spritzparameter zu fertigen, bei der Drehbearbeitung den Schnittkraftverlauf zu erfassen und zu speichern sowie das Anstreif- bzw. Einlaufverhalten der Belagvarianten zu testen. Dabei werden sich gute bis brauchbare sowie weniger brauchbare bis unbrauchbare Varianten ergeben, deren Schnittkraftverläufe zu den gesuchten Grenzwerten führen.

In den Unteransprüchen sind bevorzugte Ausgestaltungen des Verfahrens nach dem Hauptanspruch gekennzeichnet.

Die Erfindung wird anschließend anhand der Figuren noch näher erläutert. Dabei zeigen:
Figur 1 einen Teilschnitt durch ein Bauteil mit Belag sowie durch einen Drehmeißel während der Drehbearbeitung, und
Figur 2 ein Diagramm mit einem Verlauf der Tangentialkraft in Abhängigkeit vom Drehwinkel sowie mit zusätzlichen Grenzwertangaben.

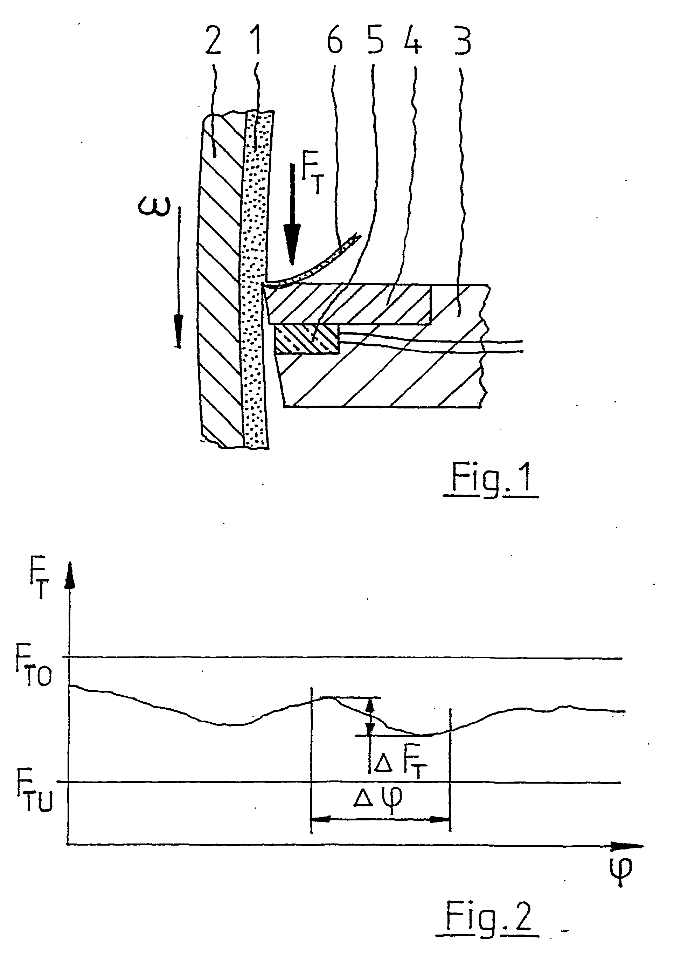

Der Belag 1 gemäß Figur 1 ist auf die kreiszylindrische Innenseite eines Bauteils 2 aufgespritzt, wobei letzteres beispielsweise ein Element aus einer Fluggasturbine oder einer stationären Gasturbine ist. Wiedergegeben ist ein Moment während des Verfahrensschrittes "Fertigdrehen auf Maß". Man erkennt rechts das schneidende Ende eines Drehmeißels 3 mit einer separaten Schneidplatte 4 sowie einen nach rechts oben ablaufenden Span 6. Das Bauteil 2 samt Belag 1 rotiert mit einer vorgegebenen Winkelgeschwindigkeit ω, die möglichst konstant gehalten wird. Unter dem belagzugewandten Ende der Schneidplatte 4 ist ein Piezogeber 5 für die sensorische Erfassung einer zur Schnittkraft proportionalen Tangentialkraft F_{T} auf die Schneidplatte 4 angeordnet. Erfindungsgemäß werden beim Fertigdrehen vorgegebene Drehparameter konstant eingehalten, nämlich die Geometrie der Schneidplatte, die zu ω proportionale Schnittgeschwindigkeit, der axiale Meißelvorschub, die radiale Einstechtiefe/Zustellung des Meißels und somit der Spanquerschnitt. Dies ist erforderlich, um einen reproduzierbaren F_{T} -Verlauf zu erhalten. Die Kraftmessung kann auch an anderer Stelle bzw. auf andere Weise erfolgen.

Figur 2 zeigt in Form eines Diagramms einen solchen F_{T}-Verlauf als zusammenhängende, unregelmäßige, vorwiegend horizontale Linie. Als horizontale Koordinate (Abszisse) ist der Drehwinkel ϕ angegeben. Alternativ könnte hier auch eine zu ϕ proportionale Drehlänge (z.B. in Metern) oder die Zeit verwendet werden. Als vertikale Koordinate (Ordinate) ist die Tangentialkraft F_{T} angegeben. Weiterhin sind ein oberer Kraftgrenzwert F_{TO} und ein unterer Kraftgrenzwert F_{TU} als horizontale Gerade aufgetragen.

Als ein Kriterium oder als das einzige Kriterium für die Qualität des Belages 1 kann vorgeschrieben sein, dass der gesamte F_{T}-Verlauf beim Fertigdrehen die Grenze F_{TU} nicht nach unten und die Grenze F_{TO} nicht nach oben überschreiten darf. Dies ist bei der vorliegenden Darstellung gegeben, so dass der Belag zur Verwendung freigegeben werden könnte.

Als zusätzliches Kriterium zu obigem könnte vorgeschrieben sein, dass über eine definierte Drehwinkeländerung Δϕ die Tangentialkraftänderung ΔF_{T} einen maximalen Grenzwert nicht überschreiten darf, weder bei fallendem noch bei steigendem Kraftverlauf. Auch dieses Kriterium soll über die ganze Länge (ϕ) des F_{T}-Verlaufs gelten, d.h. bei beliebiger Positionierung von Δϕ im Diagramm. Sinn dieses Kriteriums wäre, lokale Festigkeits- bzw. Härteänderungen und somit Inhomogenitäten des Belages zu begrenzen. Bei Überschreitung wäre auch hier eine Neufertigung erforderlich.

Es sind sicher noch weitere Kriterien denkbar, welche aber nichts am Erfindungsprinzip ändern.

## Patentansprüche

1. Verfahren zur Drehbearbeitung und zur Qualitätssicherung thermisch gespritzter, rotationssymmetrischer Anstreif- und Einlaufbeläge von Turbomaschinen, insbesondere von Gasturbinen, **dadurch gekennzeichnet,**
**dass** zunächst die in Relation zur Soll-Belagkonsistenz härtere Deckschicht durch Drehen entfernt wird,
**dass** dann der noch Materialüberschuss aufweisende Belag (1) auf Maß fertiggedreht wird,
**dass** während des Fertigdrehens definierte Drehparameter eingehalten und die Schnittkraft oder eine dazu proportionale Kraft (F_{T}) in ihrem Verlauf quantitativ erfasst und graphisch festgehalten und/oder datentechnisch gespeichert wird,
**dass** der Kraftverlauf (F_{T}) mit vorgegebenen Grenzwerten (F_{TO}, F_{TU}) verglichen wird, und
**dass** je nach Ergebnis dieses Vergleiches der Belag (1) zur Verwendung freigegeben oder wieder entfernt und mit geänderten Spritzparametern neu gefertigt wird.

2. Verfahren nach Anspruch 1, **dadurch gekennzeichnet, dass** der Belag (1) zur Verwendung freigegeben wird, wenn der gesamte Kraftverlauf (F_{T}) während des Fertigdrehens zwischen einem unteren (F_{TU}) und einem oberen (F_{TO}), jeweils vorgegebenen Kraftgrenzwert liegt.

3. Verfahren nach Anspruch 2, **dadurch gekennzeichnet, dass** der Belag (1) nur dann zur Verwendung freigegeben wird, wenn über die Einhaltung des oberen und unteren Kraftgrenzwertes (F_{TO}, F_{TU}) hinaus der Kraftverlauf (F_{T}) an jeder Stelle die Bedingung erfüllt, dass innerhalb einer vorgegebenen Drehwinkeländerung (Δϕ) die Kraftänderung (ΔF_{T}) bei Kraftzu- und Kraftabnahme einen maximalen Kraftänderungsgrenzwert nicht überschreitet.

4. Verfahren nach einem der Ansprüche 1 bis 3, **dadurch gekennzeichnet, dass** als Messgröße die Tangentialkomponente (F_{T}) der Schnittkraft oder eine zu dieser Komponente proportionale Kraft erfasst wird.

5. Verfahren nach einem der Ansprüche 1 bis 4, **dadurch gekennzeichnet, dass** das Messsignal piezoelektrisch (5) im Bereich des Drehmeißels (3) erzeugt wird.

## Claims

1. Method of rotationally machining and quality testing thermally sprayed rotationally symmetrical grazing contact or running-in linings of turbo machines, in particular gas turbines, **characterised in that** the top layer which is harder than the desired lining consistency is firstly removed by turning,
the lining (1) still incorporating surplus material is subjected to a final turning to size, during the final turning, defined rotation parameters are maintained and the characteristic curve of the cutting force or a force (F_{T}) proportional to it is quantitatively detected and fixed by means of a graph and/or stored in a data system,
the force characteristic curve (F_{T}) is compared with predefined threshold values (F_{TO}, F_{TU}) and depending on the result of this comparison, this lining (1) is authorised for use or removed and applied again with different spraying parameters.

2. Method as claimed in claim 1, **characterised in that** the lining (1) is authorised for use if the entire force characteristic curve lies between a lower (F_{TU}) and an upper (F_{TO}) force threshold value, respectively defined beforehand, during the final turning operation.

3. Method as claimed in claim 2, **characterised in that** the lining (1) is only authorised for use on condition that, in addition to the force characteristic curve (F_{T}) remaining within the upper and lower force threshold values (F_{TO}, F_{TU}), the change in force (ΔF_{T}) within a predefined change in rotation angle (Δ_{ϕ}) does not exceed a maximum force change threshold value in the event of a force increase and force decrease.

4. Method as claimed in one of claims 1 to 3, **characterised in that** the tangential component (F_{T}) of the cutting force or a force proportional to this component is detected as a measurement variable.

5. Method as claimed in one of claims 1 to 4, **characterised in that** the measurement signal is piezoelectrically (5) generated in the region of the turning tool (3).

## Revendications

1. Procédé de tournage et de contrôle de qualité de recouvrements de raclage et de rodage projetés à chaud à symétrie de révolution de turbo-machines, en particulier de turbines à gaz, **caractérisé en ce que** l'on enlève d'abord par tournage la couche de recouvrement plus dure en relation avec la consistance de consigne du recouvrement, **en ce que** l'on termine ensuite le tournage à dimension du recouvrement (1) présentant encore un excès de matière, **en ce que** l'on respecte des paramètres de tournage définis pendant le tournage final et on détecte quantitativement l'évolution de la force de coupe ou d'une force (F_{T}) proportionnelle à celle-ci et on la détermine graphiquement et/ou on la mémorise par la technique des données, **en ce que** l'on compare l'évolution de la force (F_{T}) avec des valeurs limites prédéterminées (F_{TO}, F_{TU}), et **en ce que**, en fonction du résultat de cette comparaison, on délivre le recouvrement (1) en vue de son utilisation ou on l'enlève de nouveau et on en fabrique un nouveau avec des paramètres de projection modifiés.

2. Procédé selon la revendication 1, **caractérisé en ce que** l'on délivre le recouvrement (1) en vue de son utilisation, lorsque l'évolution globale de la force (F_{T}) pendant le tournage final se situe entre une valeur limite de force inférieure (F_{TU}) et supérieure (F_{TO}) respectivement prédéterminée.

3. Procédé selon la revendication 2, **caractérisé en ce que** l'on délivre le recouvrement (1) en vue de son utilisation lorsque, outre le respect de la valeur limite de force supérieure et inférieure (F_{TO}, F_{TU}), l'évolution de la force (F_{T}) satisfait en tout point la condition selon laquelle la variation de la force (ΔF_{T}) lors d'une augmentation et d'une diminution de la force ne dépasse pas une valeur limite maximale de variation de la force à l'intérieur d'une variation de l'angle de tournage prédéterminée (Δϕ).

4. Procédé selon l'une quelconque des revendications 1 à 3, **caractérisé en ce que** l' on détecte comme grandeur de mesure la composante tangentielle (F_{T}) de la force de coupe ou une force proportionnelle à cette composante tangentielle.

5. Procédé selon l'une quelconque des revendications 1 à 4, **caractérisé en ce que** l'on produit le signal de mesure de façon piézoélectrique (5) dans la région de l'outil de tournage (3).
